# EUROPEAN PATENT SPECIFICATION

(11) **EP 3 419 881 B1**
(45) Date of publication and mention of the grant of the patent: **27.01.2021**
(21) Application number: 17756922.5
(22) Date of filing: 20.02.2017
(51) Int. Cl.: B62D 33/02, B60P 7/12, B60P 3/41

(54) **BUNK LOCKING ARRANGEMENT FOR A VEHICLE**
KOJENVERRIEGELUNGSANORDNUNG FÜR EIN FAHRZEUG
AGENCEMENT DE VERROUILLAGE DE COUCHETTE POUR UN VÉHICULE

(30) Priority: 26.02.2016 SE 1650256
(43) Date of publication of application: 02.01.2019
(73) Proprietor: Exte Fabriks AB, 820 41 Färila (SE)
(72) Inventor: LÖFGREN, Lars, 827 30 Ljusdal (SE)
(74) Representative: Brann AB
(86) International application number: PCT/SE2017/050160
(87) International publication number: WO 2017/146632

(56) References cited:
- SE-B- 432 396
- SE-B- 445 440
- US-A- 1 360 002
- US-A- 2 788 225
- US-A- 2 793 049
- US-A- 3 033 592
- US-A- 3 129 955

## Description

### TECHNICAL FIELD

The present invention relates to a bunk locking arrangement for a vehicle such as a truck or a trailer.

### BACKGROUND

A vehicle such as a truck or a trailer for transporting lumber is generally equipped with a bunk for holding the lumber in place, said bunk comprising a number of bolsters that are arranged transversally on the vehicle. Each bolster is connected to two stakes, one at each end, that extend essentially vertical from the vehicle and are intended to hold the lumber or logs of wood securely in place when the truck or trailer is loaded.

For reasons of safety and reliability, the stakes must be able to withstand large forces from the lumber pressing against them as well as vibrations when the vehicle is travelling at high speed or on uneven roads, and they are therefore generally fixed with regard to the bolster. When the vehicle is empty, i.e. not loaded with lumber, the stakes are not subjected to forces from the lumber itself but there is constantly a risk of damage due to vibrations created when the vehicle moves on the road.

It is often desired to be able to decrease the height of the truck or trailer to facilitate transport or to enable loading with other goods, and also to eliminate the risk of vibrations damaging the bunk. If the stakes are fixed on the bolster by screwing or welding it is often not possible to remove them in a convenient and time efficient manner, but in some bunk arrangements the stakes are arranged to be folded or pivoted against the bolster to a horizontal position where they lie directly on top of or beside the bolster, thus allowing for a more versatile use of the truck or trailer and at the same time minimizing the risk of damage due to vibrations.

However, if the stakes are pivotally arranged a locking arrangement is necessary to prevent an undesired pivoting or folding, and a plurality of such locking arrangements are known within the art. Examples are shown by US2908509 (White), US299019 (Leach) or US2469760 (Berry), where different types of hitches are pivoted to lock the stakes, or by US2678220 (Tucker) or DE806536 (Schlumbohm), where locking devices are put in place and secured by a simple lock such as a pin.

Moreover, document US 2 788 225 A discloses a bunk locking arrangement for a vehicle exhibiting the technical features of the preamble of independent claim 1.

A disadvantage of the known locking arrangements is, however, that they fail to secure the stakes in a reliable and safe way when the vehicle is not loaded with lumber. The locking arrangements are generally not able to withstand vibrations or wear and tear during long use on uneven roads, and there is a therefore a risk that the stakes are loosened during transport and may pivot against the bolster or away from it, causing damage to the vehicle and also possibly to other vehicles, structures or persons in the immediate vicinity. There is also a substantial risk that wear or damage to the locking arrangements may cause the stakes to become loosened during transport when the bunk is loaded with lumber, resulting in possible additional damage by falling lumber that may result in very serious damage.

There is therefore a need for an improved locking arrangement to overcome the disadvantages described above, while at the same time maintaining the functionality of reduction of the height of a vehicle such as a truck or a trailer.

### SUMMARY OF THE INVENTION

The object of the present invention is to eliminate or at least to minimize the problems described above. This is achieved through a bunk locking arrangement according to the independent claim 1, while particularly advantageous embodiments are disclosed through the dependent claims.

Thus, thanks to the invention, the bunk locking arrangement can secure the socket and thereby the stake normally mounted on the socket in the open position in which the stake extends essentially vertical from the bolster, and by the catch mechanism pulling on the hitch the socket is fixated and a release of the socket of unwanted pivoting of the socket and stake can be prevented. Furthermore, by the secure hold and the constant pull of the catch mechanism, the wear and tear on the bunk locking arrangement due to vibrations can be decreased to increase the lifespan of the bunk.

According to one aspect of the invention, the catch mechanism comprises an excenter means. Thereby, the catch mechanism can pull on the hitch by the excenter means being turned. Furthermore, by using an excenter means the advantageous effect of a pulling or tightening on the hitch is created with sturdy components that are able to withstand vibrations, dirt and general wear and tear.

According to another aspect of the invention, the hitch is the first locking member arranged on the socket and the catch mechanism is the second locking member on the bolster. Thereby, the forming of the connection between the hitch and catch mechanism can be achieved by pivoting the socket to the open position without requiring manual guiding of the hitch. Preferably, the hitch comprises a beveled surface arranged to slide along the catch mechanism as the socket is pivoted from the closed to the open position, to allow the hitch to be guided by the catch mechanism itself and to fall into place around the catch mechanism when the socket has reached the open position.

According to another aspect of the invention, a hitch release mechanism is provided and arranged to release the hitch from the catch mechanism, said hitch release mechanism being operated by pivoting the socket in relation to the bolster. Thereby, the hitch and the catch mechanism can be disconnected by guiding the socket itself and a manual operation of the hitch and catch mechanism alone is not required.

Preferably, the hitch release mechanism comprises
- a release element arranged on the hitch and having a release surface, and
- a counter surface arranged in connection with the catch mechanism,
wherein the hitch is arranged to be released from the catch mechanism by the release surface engaging the counter surface to push the release element and thereby also the hitch away from the catch mechanism. This has the additional advantage that the hitch can be pushed up from the catch mechanism automatically through the interaction of the release element and the counter surface, so that the entire process of releasing the hitch can be performed by operating the socket.

More preferably, the release element is a pendulum pivotally arranged on the hitch and able to pivot to bring the release surface into contact with the counter surface. Thereby, the pendulum is automatically activated by means of gravity when the socket is pivoted to allow the pendulum to swing. Furthermore, the pendulum can be pivoted away during other stages of the operation of the bunk locking arrangement to allow for a compact and convenient design of the locking arrangement itself.

According to another aspect of the invention, at least one deformation element is provided and arranged on at least one of the bolster and the socket and able to receive and be at least partially deformed by the other of said bolster and socket when the socket is pivoted to the open position. Thereby, the socket can be received in the open position and its movement halted through a controlled braking as the deformation element is compressed.

Preferably, the at least one deformation element is arranged to be deformed further by pivoting the socket away from the bolster beyond the open position, thereby allowing a movement to an extreme position where the hitch and the catch mechanism can be disconnected before the socket is allowed to return to the closed position essentially parallel to the bolster.

According to yet another aspect of the invention, the hitch comprises an adjustment element for adjusting the distance between the first attachment point and the second attachment point. Thereby, the locking arrangement can easily be adapted to fit different bunks and also to compensate for wear and tear to the components creating an allowance in the locking arrangement to prevent the secure locking otherwise created by pulling on the hitch.

Preferably, the adjustment element comprises a first through hole, said adjustment element being mounted on the hitch and the first through hole being able to receive a pivot element at the first attachment point to allow the hitch to pivot, and wherein the first through hole is further arranged off center in the adjustment element. Thereby, by turning the adjustment element around an axis through the hole, the distance from the hole to a forward end of the hitch that is arranged to interact with the catch mechanism can be altered in a robust and easy manner. In one embodiment, the adjustment element is mounted on the hitch by cogs on an outer circumference of the adjustment element cooperating with corresponding cogs on an inner circumference of a second through hole on the hitch. The cooperating cogs create a very large frictional force that prevents and undesired turning of the adjustment element, even when subjected to very large forces or vibrations.

Many additional advantages and benefits of the invention will become readily apparent to the person skilled in the art in view of the detailed description below.

### DRAWINGS

The invention will now be described in more detail with reference to the appended drawings, wherein
Fig. 1 discloses a planar view from the side of a bolster with sockets and stakes, and having a bunk lock mechanism according to the present invention;
Fig. 2a discloses a side view of a socket and bolster, the socket being in a closed position and the bunk locking arrangement being in a disconnected state;
Fig. 2b discloses a cross-sectional view of the socket and bolster of Fig. 2a;
Fig. 2c discloses a cross-sectional view from above of the socket and bolster of Fig. 2a;
Fig. 3a discloses a side view of the socket and bolster with the bunk locking arrangement in a first stage of connection;
Fig. 3b discloses a cross-sectional side view of the first stage of connection;
Fig. 3c discloses a cross-sectional view from above of the first stage of connection;
Fig. 4a discloses a side view of the socket and bolster when the bunk locking arrangement is in a second stage of connection;
Fig. 4b discloses a view from above of the socket and bolster of Fig. 4a;
Fig. 4c discloses a cross-sectional view from the side taken along A-A of Fig. 4b;
Fig. 4d discloses cross-sectional view from above taken along B-B of Fig. 4a;
Fig. 4e discloses a cross-sectional view from the side taken along C-C of Fig. 4b;
Fig. 4f discloses a cross-sectional view from above taken along D-D of Fig. 4a;
Fig. 5a discloses a side view of the socket and bolster when the bunk locking arrangement is in a third stage of connection;
Fig. 5b discloses view from above of the socket and bolster of Fig. 5a;
Fig. 5c discloses a cross-sectional view from the side taken along E-E of Fig. 5b;
Fig. 5d discloses cross-sectional view from above taken along F-F of Fig. 5a;
Fig. 5e discloses a cross-sectional view from the side taken along G-G of Fig. 5b;
Fig. 5f discloses a cross-sectional view from above taken along H-H of Fig. 5a;
Fig. 6a discloses a side view of the socket and bolster when the bunk locking arrangement is in a fourth stage of connection;
Fig. 6b discloses a cross-sectional side view of the socket and bolster of Fig. 6a;
Fig. 6c discloses a cross-sectional view from above of the socket and bolster of Fig. 6a;
Fig. 7a discloses a cross-sectional side view of a central hitch element of the hitch of the bunk locking arrangement according to the invention;
Fig. 7b discloses a perspective view of an adjustment element in the form of a ring; and
Fig. 7c discloses a side element of the hitch.

### DETAILED DESCRIPTION

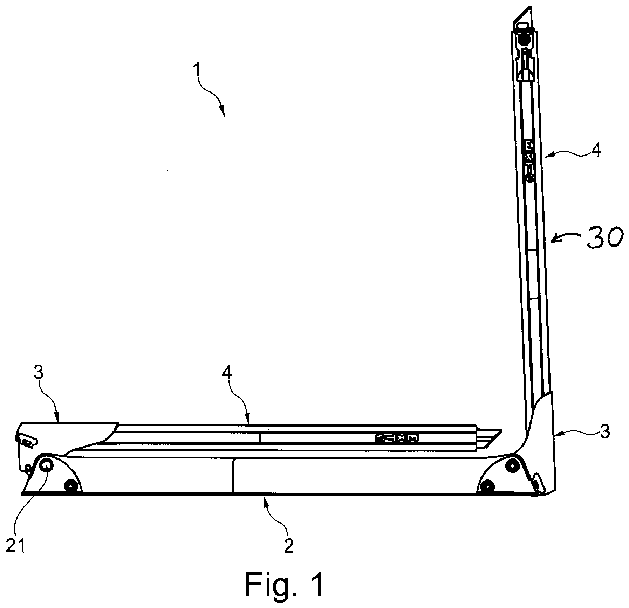

Fig. 1 discloses a bunk 1 with a bolster 2 arranged to be connectable to a vehicle such as a truck or a trailer, according to a preferred embodiment of the present invention. The term vehicle is herein understood to mean a trailer for a truck as well as the truck itself, and it is to be noted that the vehicle may comprise a trailer only, and could also signify another structure on wheels on which goods such as lumber may be transported on roads.

On each end of the bolster 2, stake arrangements 30 are mounted and each stake arrangement in this embodiment comprises a socket 3 holding a stake 4. It is to be noted that the socket 3 and stake 4 could also be integrated into a single element and that what is said herein with reference to a stake arrangement comprising a socket and stake would also apply in the same way to such an integrated stake arrangement.

The socket 3 is pivotally arranged on the bolster 2 at a pivot point 21 near an end of the bolster 2, so that the stake arrangement 30, i.e. the socket 3 and stake 4 can pivot between a closed position where the stake lies essentially parallel to the bolster 2 (shown on the left hand side of Fig. 1) and an open position where the stake 4 mounted on the socket 3 is at an angle to the bolster 2, preferably extending essentially vertical from the bolster 2. In the open position, the bunk 1 can be loaded with lumber or similar goods, while the closed position is suited for facilitating transport of the vehicle while unloaded and provides a reduction in height of the bunk 1. The vehicle may also be loaded with various goods in the closed position, so that the vehicle can be used for transporting objects other than logs or lumber. It may also be advantageous to store a trailer or other vehicle on another vehicle having bunks in the closed position, to facilitate transport of the vehicle in question.

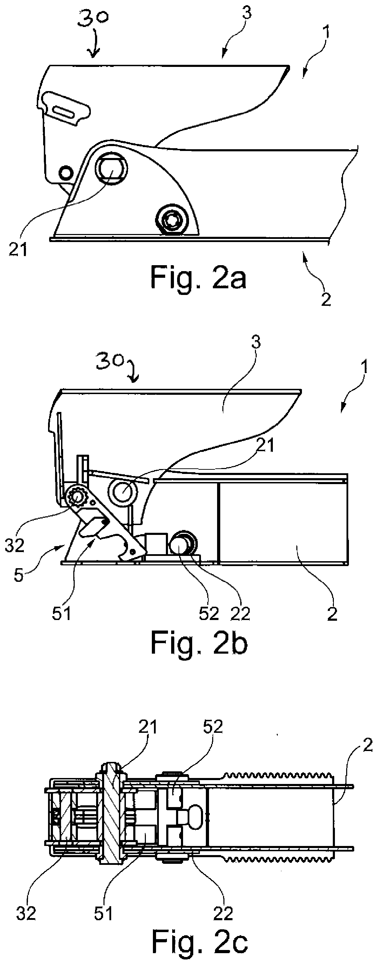

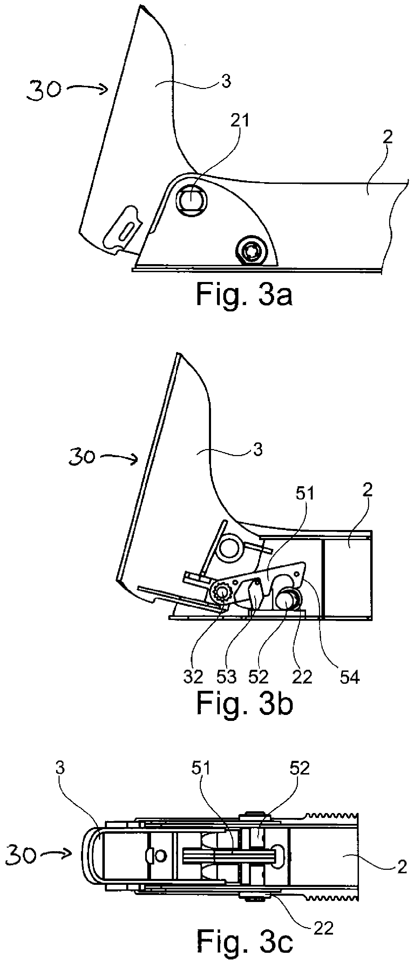

Fig. 2a shows the bolster 2 and socket 3 of the stake arrangement 30 of the left hand side of Fig. 1, with the socket 3 in the closed position. Fig. 2b shows the same components in cross section, disclosing also the bunk locking arrangement 5 according to a preferred embodiment of the present invention. The bunk locking arrangement 5 comprises a first locking member 51 arranged on a first attachment point 32 on the socket 3 and a second locking member 52 arranged on a second attachment point 22 on the bolster 2. The first attachment point 32 is arranged to be closer to the bottom of the bolster 2 when the socket 3 is in the open position (see Fig. 3-6). The bunk locking arrangement 5 is in a disconnected state in this Figure, meaning that the hitch and the catch mechanism are not interacting with each other.

In this preferred embodiment, the first locking member 51 is a hitch 51 and the second locking member 52 is a catch mechanism 52, but it is to be noted that the opposite may be suitable in other embodiments (i.e. the first locking member being a catch mechanism and the second locking member being a hitch).

Fig. 2c show the components mentioned above from above, and the relative placement of the pivot point 21 and the first and second attachment points 32, 22 are shown.

Fig. 3a-c discloses a first stage of connection where the stake arrangement 30 with the socket 3 is pivoted away from the bolster 2 towards the open position. The hitch 51 is operated by the pivoting movement of the socket 3 and pivots about the first attachment point 32 towards the catch mechanism 52. Thanks to a beveled surface 54 on the hitch 51, the hitch 51 can slide upwards along the catch mechanism and fall down to enclose the catch mechanism 52 as the socket 3 is moved further towards the open position. The catch mechanism 52 is in this preferred embodiment operated by an excenter means, as will be described further below.

The hitch 51 further comprises a release element 53, here in the form of a pendulum, that is pivotally mounted on the hitch 51 itself and able to swing between a retracted position along the hitch 51 and a release position where it can act to release the hitch 51 from the catch mechanism 52, as will be described in detail further below.

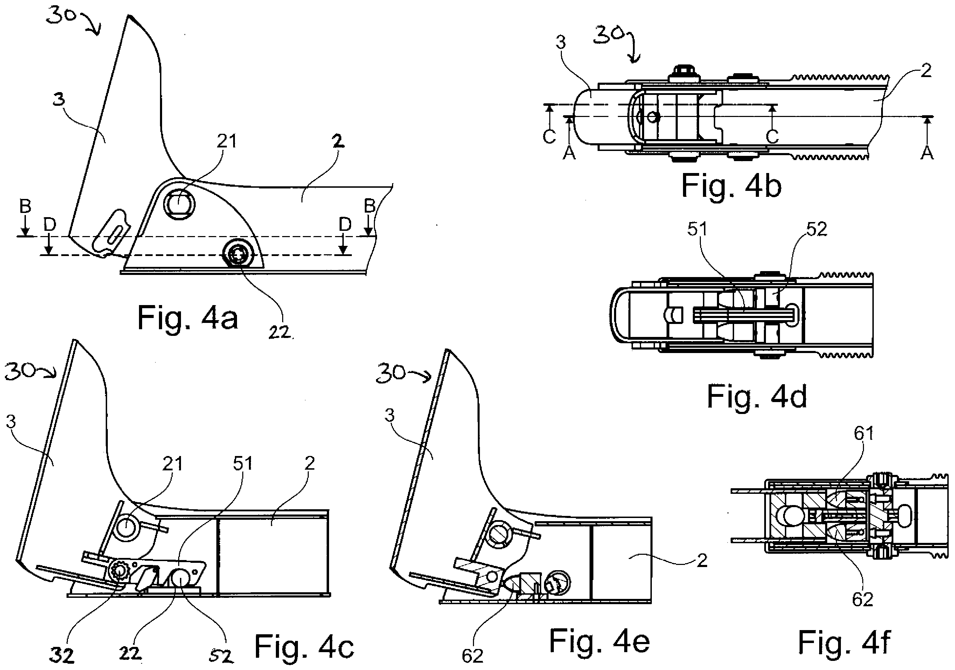

Fig. 4a-4f disclose a second stage of connection, where the socket 3 of the stake arrangement 30 has been pivoted far enough away from the closed position to allow the hitch 51 to fall into place on the catch mechanism 52 and be held by it. In this position, the socket 3 is held in place by means of the locking arrangement and is prevented from falling down, i.e. pivoting towards the closed position on the bolster 2. It is however not locked and the hitch 51 could be disengaged from the catch mechanism 52 by vibrations if the socket were allowed to be held in the second stage of connection when the truck or trailer is driven on uneven roads.

Fig. 4e and Fig. 4f also disclose at least one but preferably two deformation elements 61, 62 in the form of rubber buffers that are arranged on the catch mechanism 52 and able to receive the socket 3 and be deformed to brake the pivoting movement of the socket 3 itself. In the second stage of connection, the deformation elements 61, 62 are only deformed to a smaller degree to allow for a larger deformation in later stages of connection as described below. It is also to be noted that the deformation elements could in another embodiment be placed on the socket and receive the bolster without additional alterations to the bunk locking arrangement.

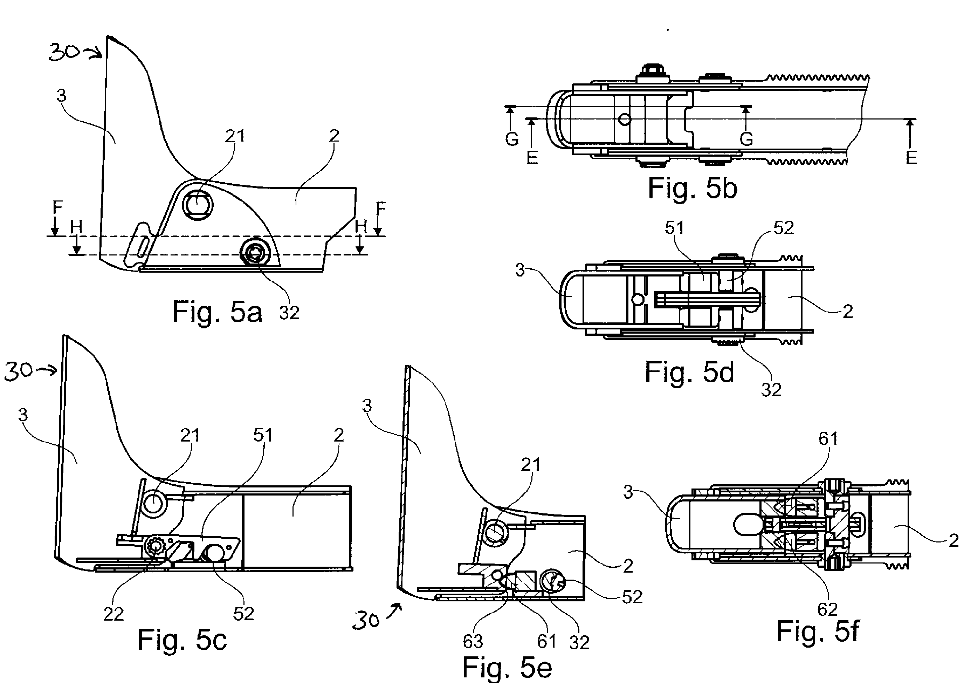

Fig. 5a-5f disclose a third stage of connection, where the socket 3 of the stake arrangement 30 has been securely locked into place by the bunk locking arrangement 5 by operating the catch mechanism 52 to pull on the hitch 51 and thereby fix the socket 3 in the open position, and also further deform the deformation elements 61, 62. The catch mechanism 52 is operated through a movement along the bolster 2 away from the socket 3 and a fastening in a position reached after that movement to achieve a holding force pulling steadily on the hitch 51 in order to maintain the stake arrangement 30 in the upright position, also referred to herein as the open position.

In this preferred embodiment, the catch mechanism 52 is operated by turning the excenter means to pull the hitch 51 further along the bolster 2 in a direction away from the socket 3. Thanks to the placement of the first attachment point 22 beneath the pivot point 21, i.e. closer to a bottom end of the bolster 2, a lever is formed between the first attachment point 22 and the pivot point 21 and allows the socket 3 to be pulled into the locked position, i.e. the third stage of connection, by pulling on the hitch 51.

The excenter means may comprise an excenter screw and is preferably turned manually by an operator using a suitable tool, but may also be operated in other suitable ways. In an alternative embodiment, the bunk locking arrangement 5 could also be locked by the hitch being mounted on an excenter means or similar and provide a pulling force along the bolster towards the socket when that excenter means is turned by an operator. Also, instead of excenter means or other excenter mechanism, alternative embodiments could instead have an element that is slidable along the bolster and can pull on the hitch and be able to be fixed in place when a desired locking of the socket has been achieved. Also, that element could alternatively be biased by a spring or similar.

Fig. 5e-f further disclose the deformation elements 61, 62 that are deformed further by the socket 3 that presses against them by means of a deformation surface 63 on the socket 3.

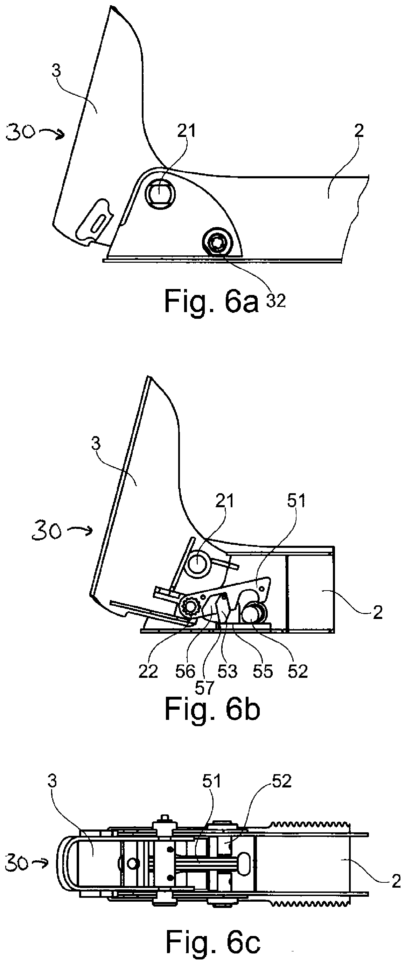

Fig. 6a-6c disclose a fourth step of connection where the bunk locking arrangement 5 has been unlocked and the hitch 51 has been lifted from the catch mechanism 52. This is achieved through the socket 3 of the stake arrangement 30 being pivoted beyond the open position, i.e. moved to an angle from the closed position that is larger than the open position. This allows the release element 53 to swing free from its retracted position in a hollow 56 in the hitch 51 towards a release position where it hangs down from the hitch 51. When the socket 3 is pivoted back to the open position from the position beyond, a release surface on a bottom surface of the release element 53 engages a counter surface 55 on the catch mechanism 52 and pushes the release element 53 itself and thereby also the hitch 51 upwards, away from the catch mechanism 52. Further pivoting of the socket 3 from the open position towards the closed position creates a retraction of the hitch 51 away from the bolster 2 and towards the left hand side of Fig. 6a-6c, thereby disconnecting the bunk locking arrangement 5 and allowing the socket 3 to be lowered towards the closed position. In the position beyond the open position, the deformation element(s) are arranged to be deformed and thereby allow a controlled operation of the socket 3 in relation to the bolster 2.

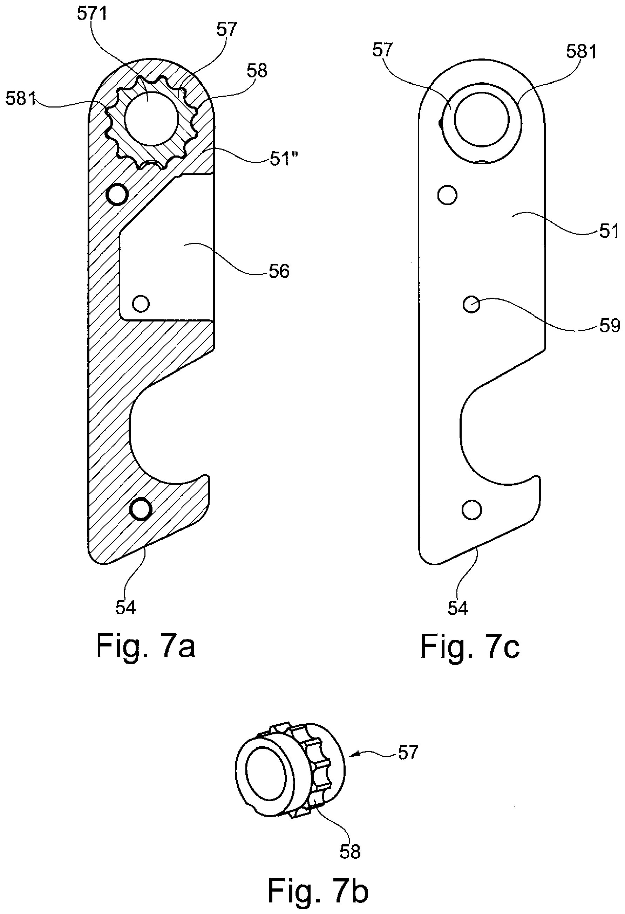

Fig. 7a-7c show the hitch 51 according to this preferred embodiment. The hitch 51 may comprise a plurality, preferably three, layers having outer layers 51' arranged on either side of an inner layer 51". This is advantageous in creating a strong and durable hitch able to withstand large forces and vibrations when the bunk locking arrangement 5 is locked, and also when manufacturing the hitch itself. The inner layer 51" has the hollow 56 in which the release element 53 can be held, while the outer layers 51' comprise a release element pivot 59 on which the release element 53 can be mounted by means of a pin or similar and be allowed to pivot into and out of the hollow 56.

The hitch 51 further comprises an adjustment element 57, shown in Fig. 7b in a perspective view and shown mounted in the cross-sectional views of Fig. 7a and Fig. 7c. The adjustment element 57 is in its most basic form an essentially cylindrical structure having a first through hole 571 that is able to receive a pivot element such as a pin at the first attachment point 22 to allow the hitch 51 to pivot. The inner layer 51" and outer layers 51' have a second through hole 581 in which the adjustment element 57 is mounted. It is to be noted, however, that the adjustment element 57 may have other shapes also.

The first through hole 571 is arranged off center in the adjustment element 57 so that the length of the hitch 51 from the first through hole 571 to the beveled surface 54 can be altered by rotating the adjustment element 57 in the second through hole 581. When the hitch 51 is mounted in the bunk locking arrangement 5, turning the adjustment element 57 in the second through hole 581 serves to adjust the distance between the first attachment point 22 and the second attachment point 32. This is especially advantageous when mounting the bunk locking arrangement 5 on bunks having different measurements, or if the components of a bunk already having a bunk locking arrangement 5 become worn or damaged in such a way that it is no longer possible to achieve a secure hold of the socket 3 through the interaction between hitch and catch mechanism. Altering the distance between the first and second attachment points 22, 32 allows the bunk locking arrangement 5 to regain its ability to create a secure lock and thereby hold the socket stably in place.

Preferably, the adjustment element 57 comprises some kind of friction means to prevent an undesired turning of the adjustment element 57 in the second through hole 581. The friction means can advantageously be cogs 58 mounted on an outer circumference of the adjustment element 57 and arranged to cooperate with corresponding cogs on an inner circumference of the second through hole 581 on the hitch 51. These corresponding cogs may be placed on the inner layer 51" only. As an alternative to the cogs, the adjustment element 57 may be held in place by an elastic bushing mounted between the adjustment element and the hitch itself, and alternatively other ways of securing the adjustment element in the hitch may also be used.

In another embodiment, the hitch may be manufactured through molding, for instance, and comprise only one layer that extends over the entire width of the hitch 51 in the preferred embodiment described above. Such a molded hitch may be cut to form the hollow that houses the pendulum and the through hole in which the adjustment element is placed.

The operation of the bunk locking arrangement 5 will now be described in detail with reference to the Figures.

When the stake arrangement 30 (i.e. the socket 3 and stake 4) is in the closed position on the bolster 2, the bunk locking arrangement 5 is disconnected. In order to place the socket 3 and stake 4 in the open position, a person operating the bunk may manually grip the stake 4 or the socket 3 directly and pivot them away from the bolster 2. When the socket 3 has been pivoted towards the first stage of connection, the hitch 51 has been pivoted towards the catch mechanism 52 so that the beveled surface 54 of the hitch 51 allows the hitch 51 to slide against the catch mechanism 52 and begin to fall into place through gravitational force around the catch mechanism 52 itself. As the socket 3 is pivoted further, to the second stage of connection, the hitch 51 has fallen down around the catch mechanism 52 and holds the socket in place but remains unlocked and can pivot but not fall down towards the closed position. The person operating the bunk 1 may release the socket 3 and stake 4 without risking damage due to the socket 3 and stake 4 falling down, which allows for the raising of several stakes in succession before starting to lock them, or for other actions that are needed when managing the bunks.

In order to lock the bunk locking arrangement 5, the operator uses a suitable tool to turn the excenter means of the catch mechanism 52 in order to pull on the hitch 51 and fixate the socket 3 in the locked position, or third stage of connection. The stake 4 is now held stably by the socket 3 and the bunk 1 may be loaded with lumber or similar goods, but may also be transported in the open position without risking damage due to vibrations.

When the bunk locking arrangement 5 is to be unlocked and the socket 3 and stake 4 folded again, the operator starts with releasing the catch mechanism 52 by turning the excenter means to its original position. He then pivots the socket 3 and stake 4 further away from the closed position, beyond the open position which causes the release element 54 to fall from the hollow 56 in the hitch 51 and pivot towards the counter surface 56 on the catch mechanism 52.

Then, the operator continues to pivot the stake 4 and socket 3 of the stake arrangement 30 back towards the closed position, which causes the hitch 51 to be lifted from the catch mechanism 52 and retracted as described above. Finally, the socket 3 and stake 4 are allowed to reach the closed position, lying essentially parallel to the bolster 2.

It is especially advantageous that the operation of the hitch 51, both when gripping the catch mechanism 52 and when being released from it, is performed solely by pivoting the socket 3 in relation to the bolster 2. Thereby, the hitch 51 can be mounted inside the bolster 2 and socket 3 and be protected from dirt and other damage, while a steady and reliable operation is nevertheless enabled. The operator then only needs to pivot the socket to the desired position and operate the catch mechanism 52 from the outside of the bunk 1 by turning the excenter means.

The invention is not to be seen as limited by the embodiments described above, but may be varied within the scope of the claims. It is also to be noted that elements from the various embodiments may be freely combined with each other unless it is specifically stated that such a combination is unsuitable.

## Claims

1. Bunk locking arrangement for a vehicle such as a truck or a trailer, comprising
- a bolster (2) arranged to be connectable to a vehicle
- a stake arrangement (30), the stake arrangement (30) being pivotally arranged on the bolster (2) at a pivot point at an end of the bolster (2) and able to pivot between an open position where the stake arrangement (30) is at an angle to the bolster (2) and a closed position where the stake arrangement is essentially parallel to the bolster (2),
- a first locking member arranged on a first attachment point (32) on the stake arrangement (30), said attachment point being closer to a bottom of the stake arrangement (30) than the pivot point when the stake arrangement (30) is in the open position,
- a second locking member arranged on a second attachment point (22) on the bolster (2),
**characterized in** one of the first and second locking members being a hitch (51) and the other being a catch mechanism (52), said hitch (51) being arranged to form a connection with the catch mechanism (52) in the open position and said catch mechanism (52) further being arranged to secure the stake arrangement (30) in the open position by pulling on the hitch (51) to pull the first attachment point (32) towards the second attachment point (22), wherein a lever is formed between the first attachment point (32) and the pivot point.

2. Bunk locking arrangement according to claim 1, wherein the catch mechanism (52) comprises an excenter means.

3. Bunk locking arrangement according to claim 1 or 2, wherein the hitch (51) is the first locking member arranged on the stake arrangement (30) and the catch mechanism (52) is the second locking member on the bolster (2).

4. Bunk locking arrangement according to any of claims 1-3, further comprising a hitch release mechanism arranged to release the hitch (51) from the catch mechanism (52), said hitch release mechanism being operated by pivoting the stake arrangement (30) in relation to the bolster (2).

5. Bunk locking arrangement according to claim 4, wherein the hitch release mechanism comprises
- a release element (53) arranged on the hitch (51) and having a release surface, and
- a counter surface (55) arranged in connection with the catch mechanism (52),
wherein the hitch (51) is arranged to be released from the catch mechanism (52) by the release surface engaging the counter surface to push the release element and thereby also the hitch (51) away from the catch mechanism (52).

6. Bunk locking arrangement according to claim 5, wherein the release element (53) is a pendulum pivotally arranged on the hitch (51) and able to pivot to bring the release surface into contact with the counter surface.

7. Bunk locking arrangement according to any previous claims, further comprising at least one deformation element (61, 62) arranged on at least one of the bolster (2) and the stake arrangement (30) and able to receive and be at least partially deformed by the other of said bolster (2) and stake arrangement (30) when the stake arrangement (30) is pivoted to the open position.

8. Bunk locking arrangement according to claim 7, wherein the at least one deformation element is arranged to be deformed further by pivoting the stake arrangement (30) away from the bolster (2) beyond the open position.

9. Bunk locking element according to any of the previous claims, wherein the hitch (51) comprises an adjustment element (57) for adjusting the distance between the first attachment point (32) and the second attachment point (22).

10. Bunk locking arrangement according to claim 9, wherein the adjustment element comprises a first through hole, said adjustment element being mounted on the hitch (51) and the first through hole being able to receive a pivot element at the first attachment point (32) to allow the hitch (51) to pivot, and wherein the first through hole is further arranged off center in the adjustment element.

11. Bunk locking arrangement according to claim 10, wherein the adjustment element is mounted on the hitch (51) by cogs on an outer circumference of the adjustment element cooperating with corresponding cogs on an inner circumference of a second through hole on the hitch (51).

12. Bunk locking arrangement according to claim 10, wherein the adjustment element is mounted on the hitch (51) by a thread on an outer circumference of the adjustment element cooperating with a corresponding thread on an inner circumference of second through hole on the hitch (51).

## Patentansprüche

1. Kojenverriegelungsanordnung für ein Fahrzeug, wie einen Lastwagen oder einen Anhänger, umfassend
- einen Hauptquerträger (2), der so angeordnet ist, dass er mit einem Fahrzeug verbunden werden kann,
- eine Rungenanordnung (30), wobei die Rungenanordnung (30) schwenkbar auf dem Hauptquerträger (2) an einem Schwenkpunkt an einem Ende des Hauptquerträgers (2) angeordnet ist und in der Lage ist, zwischen einer offenen Position, in der die Rungenanordnung (30) in einem Winkel zum Hauptquerträger (2) steht, und einer geschlossenen Position, in der die Rungenanordnung im Wesentlichen parallel zum Hauptquerträger (2) steht, zu schwenken,
- ein erstes Verriegelungselement, das an einem ersten Befestigungspunkt (32) an der Rungenanordnung (30) angeordnet ist, wobei der Befestigungspunkt näher an einem Boden der Rungenanordnung (30) liegt als der Schwenkpunkt, wenn sich die Rungenanordnung (30) in der offenen Position befindet,
- ein zweites Verriegelungselement, das an einem zweiten Befestigungspunkt (22) auf dem Hauptquerträger (2) angeordnet ist,
**dadurch gekennzeichnet, dass** eines der ersten und zweiten Verriegelungselemente eine Kupplung (51) und das andere ein Fangmechanismus (52) ist, wobei die Kupplung (51) so angeordnet ist, dass sie in der offenen Position eine Verbindung mit dem Fangmechanismus (52) bildet, und der Fangmechanismus (52) weiter so angeordnet ist, dass er die Rungenanordnung (30) in der offenen Position durch Ziehen an der Kupplung (51) sichert, um den ersten Befestigungspunkt (32) zum zweiten Befestigungspunkt (22) zu ziehen, wobei zwischen dem ersten Befestigungspunkt (32) und dem Schwenkpunkt ein Hebel gebildet wird.

2. Kojenverriegelungsanordnung nach Anspruch 1, wobei der Fangmechanismus (52) ein Exzentermittel umfasst.

3. Kojenverriegelungsanordnung nach Anspruch 1 oder 2, wobei die Kupplung (51) das erste Verriegelungselement ist, das an der Rungenanordnung (30) angeordnet ist, und der Fangmechanismus (52) das zweite Verriegelungselement an dem Hauptquerträger (2) ist.

4. Kojenverriegelungsanordnung nach einem der Ansprüche 1-3, weiter einen Kupplungsfreigabemechanismus umfassend, der so angeordnet ist, dass er die Kupplung (51) vom Fangmechanismus (52) freigibt, wobei der Kupplungsfreigabemechanismus durch Schwenken der Rungenanordnung (30) in Bezug auf den Hauptquerträger (2) betätigt wird.

5. Kojenverriegelungsanordnung nach Anspruch 4, wobei der Kupplungsfreigabemechanismus umfasst
- ein Freigabeelement (53), das an der Kupplung (51) angeordnet ist und eine Freigabefläche aufweist, und
- eine Gegenfläche (55), die in Verbindung mit dem Fangmechanismus (52) angeordnet ist,
wobei die Kupplung (51) so angeordnet ist, dass sie von dem Fangmechanismus (52) freigegeben wird, indem die Freigabefläche mit der Gegenfläche in Eingriff kommt, um das Freigabeelement und dadurch auch die Kupplung (51) von dem Fangmechanismus (52) wegzudrücken.

6. Kojenverriegelungsanordnung nach Anspruch 5, wobei das Freigabeelement (53) ein Pendel ist, das schwenkbar an der Kupplung (51) angeordnet und in der Lage ist, zu schwenken, um die Freigabefläche mit der Gegenfläche in Kontakt zu bringen.

7. Kojenverriegelungsanordnung nach einem der vorstehenden Ansprüche, weiter mindestens ein Verformungselement (61, 62) umfassend, das auf mindestens einem von dem Hauptquerträger (2) und der Rungenanordnung (30) angeordnet ist und in der Lage ist, das andere von dem Hauptquerträger (2) und der Rungenanordnung (30) aufzunehmen und mindestens teilweise dadurch verformt zu werden, wenn die Rungenanordnung (30) in die offene Position geschwenkt wird.

8. Kojenverriegelungsanordnung nach Anspruch 7, wobei das mindestens eine Verformungselement so angeordnet ist, dass es weiter verformt werden kann, indem die Rungenanordnung (30) über die offene Position hinaus von dem Hauptquerträger (2) weggeschwenkt wird.

9. Kojenverriegelungselement nach einem der vorstehenden Ansprüche, wobei die Kupplung (51) ein Einstellelement (57) zum Einstellen des Abstands zwischen dem ersten Befestigungspunkt (32) und dem zweiten Befestigungspunkt (22) umfasst.

10. Kojenverriegelungsanordnung nach Anspruch 9, wobei das Einstellelement ein erstes Durchgangsloch umfasst, wobei das Einstellelement an der Kupplung (51) angebracht ist und das erste Durchgangsloch in der Lage ist, ein Schwenkelement am ersten Befestigungspunkt (32) aufzunehmen, um der Kupplung (51) ein Schwenken zu ermöglichen, und wobei das erste Durchgangsloch weiter außermittig im Einstellelement angeordnet ist.

11. Kojenverriegelungsanordnung nach Anspruch 10, wobei das Einstellelement an der Kupplung (51) durch Zahnräder an einem Außenumfang des Einstellelements befestigt ist, das mit entsprechenden Zahnrädern an einem Innenumfang eines zweiten Durchgangslochs an der Kupplung (51) zusammenwirkt.

12. Kojenverriegelungsanordnung nach Anspruch 10, wobei das Einstellelement durch ein Gewinde an einem Außenumfang des Einstellelements, das mit einem entsprechenden Gewinde an einem Innenumfang eines zweiten Durchgangslochs an der Kupplung (51) zusammenwirkt, an der Kupplung (51) befestigt ist.

## Revendications

1. Agencement de verrouillage de couchette pour un véhicule comme un camion ou une remorque, comprenant :
- un traversin (2) agencé de façon à pouvoir être relié à un véhicule,
- un agencement de piquet (30), l'agencement de piquet (30) étant agencé de manière pivotante sur le traversin (2) en un point de pivot à une extrémité du traversin (2) et en mesure de pivoter entre une position ouverte où l'agencement de piquet (30) est selon un angle par rapport au traversin (2) et une position fermée dans laquelle l'agencement de piquet est essentiellement parallèle au traversin (2),
- un premier élément de verrouillage agencé sur un premier point de fixation (32) sur l'agencement de piquet (30), ledit point de fixation étant plus près d'une partie inférieure de l'agencement de piquet (30) que le point de pivot quand l'agencement de piquet (30) est dans la position ouverte,
- un second élément de verrouillage agencé sur un second point de fixation (22) sur le traversin (2),
**caractérisé en ce que** l'un des premier et second éléments de verrouillage est un attelage (51) et l'autre est un mécanisme de prise (52), ledit attelage (51) étant agencé pour former une connexion avec le mécanisme de prise (52) dans la position ouverte et ledit mécanisme de prise (52) étant en outre agencé pour fixer l'agencement de piquet (30) dans la position ouverte en tirant sur l'attelage (51) pour tirer le premier point de fixation (32) vers le second point de fixation (22), dans lequel un levier est formé entre le premier point de fixation (32) et le point de pivot.

2. Agencement de verrouillage de couchette selon la revendication 1, dans lequel le mécanisme de prise (52) comprend un système à vis sans fin.

3. Agencement de verrouillage de couchette selon la revendication 1 ou 2, dans lequel l'attelage (51) est le premier élément de verrouillage agencé sur l'agencement de piquet (30) et le mécanisme de prise (52) est le second élément de verrouillage sur le traversin (2).

4. Agencement de verrouillage de couchette selon l'une quelconque des revendications 1-3, comprenant en outre un mécanisme de libération d'attelage agencé pour libérer l'attelage (51) du mécanisme de prise (52), ledit mécanisme de libération d'attelage étant actionné en faisant pivoter l'agencement de piquet (30) relativement au traversin (2).

5. Agencement de verrouillage de couchette selon la revendication 4, dans lequel le mécanisme de libération d'attelage comprend :
- un élément de libération (53) agencé sur l'attelage (51) et présentant une surface de libération, et
- une contre-surface (55) agencée en connexion avec le mécanisme de prise (52),
dans lequel l'attelage (51) est agencé pour être libéré du mécanisme de prise (52) par la surface de libération se mettant en prise sur la contre-surface pour pousser l'élément de libération et ainsi également l'attelage (51) en le détachant du mécanisme de prise (52).

6. Agencement de verrouillage de couchette selon la revendication 5, dans lequel l'élément de libération (53) est un balancier agencé de manière pivotante sur l'attelage (51) et capable de pivoter pour mettre la surface de libération en contact avec la contre-surface.

7. Agencement de verrouillage de couchette selon l'une quelconque des revendications précédentes, comprenant en outre au moins un élément de déformation (61, 62) agencé sur au moins un du traversin (2) et de l'agencement de piquet (30) et en mesure de recevoir et d'être au moins partiellement déformé par l'autre dudit traversin (2) et de l'agencement de piquet (30) quand l'agencement de piquet (30) pivote dans la position ouverte.

8. Agencement de verrouillage de couchette selon la revendication 7, dans lequel l'au moins un élément de déformation est agencé pour être en outre déformé en faisant pivoter l'agencement de piquet (30) en l'éloignant du traversin (2) au-delà de la position ouverte.

9. Agencement de verrouillage de couchette selon l'une quelconque des revendications précédentes, dans lequel l'attelage (51) comprend un élément d'ajustement (57) pour ajuster la distance entre le premier point de fixation (32) et le second point de fixation (22).

10. Agencement de verrouillage de couchette selon la revendication 9, dans lequel l'élément d'ajustement comprend un premier orifice traversant, ledit élément d'ajustement étant monté sur l'attelage (51) et le premier orifice traversant étant capable de recevoir un élément de pivot au premier point de fixation (32) pour permettre à l'attelage (51) de pivoter et dans lequel le premier orifice traversant est en outre agencé de manière décentrée dans l'élément d'ajustement.

11. Agencement de verrouillage de couchette selon la revendication 10, dans lequel l'élément d'ajustement est monté sur l'attelage (51) par des roues dentées sur une circonférence externe de l'élément d'ajustement coopérant avec des roues dentées correspondantes sur une circonférence interne d'un second orifice traversant sur l'attelage (51).

12. Agencement de verrouillage de couchette selon la revendication 10, dans lequel l'élément d'ajustement est monté sur l'attelage (51) par un filetage sur une circonférence externe de l'élément d'ajustement coopérant avec un filetage correspondant sur une circonférence interne d'un second orifice traversant sur l'attelage (51).
